# EUROPÄISCHE PATENTANMELDUNG

(11) **EP 4 691 817 A1**
(43) Veröffentlichungstag der Anmeldung: **11.02.2026**
(21) Anmeldenummer: 25190105.4
(22) Anmeldetag: 17.07.2025
(51) Int. Cl.: B60H 1/32, B60H 1/00

(54) **VERFAHREN, RECHENEINHEIT UND COMPUTERPROGRAMM ZUM BETREIBEN EINES TEMPERIERSYSTEMS, TEMPERIERSYSTEM UND FAHRZEUG**

(30) Priorität: 08.08.2024 DE 102024207562
(71) Anmelder: Robert Bosch GmbH, 70442 Stuttgart (DE)
(72) Erfinder: Wiesboeck, Martin, 3712 Maissau (AT)

(57) **Zusammenfassung**

Die Erfindung betrifft ein Verfahren (200) zum Betreiben eines Temperiersystems für ein Fahrzeug, das einen Kompressor zum Verdichten eines Kältemittels aufweist und zumindest zum Temperieren von Luft in einer Fahrzeugkabine eingerichtet ist, umfassend ein Steuern des Kompressors zum Einstellen einer vorbestimmbaren Zieltemperatur (201) in dem Kältemittel saugseitig des Kompressors und/oder eines vorbestimmbaren Zieldrucks druckseitig des Kompressors, wobei das Steuern des Kompressors unter Verwendung einer Vorsteuerung mit einem Vorsteuerwert (230) und einer Regelung (240) mit einem Reglerwert, der einen Proportionalanteil und einen Integralanteil umfasst, erfolgt, ein Ermitteln (245) eines Adaptionsbetriebszustands des Temperiersystems, ein Ermitteln des Integralanteils des Reglerwerts, wenn der Adaptionsbetriebszustand als vorliegend ermittelt wurde, und ein Anpassen (250) des Vorsteuerwerts (230) in Abhängigkeit von dem ermittelten Integralanteil des Reglerwerts in dem Adaptionsbetriebszustand und einem Referenzintegralanteil des Reglerwerts, der für eine Referenzluftfeuchte mit dem Vorsteuerwert (230) verknüpft ist. Ferner werden eine Recheneinheit und ein Computerprogramm zur Durchführung eines solchen Verfahrens (200) sowie ein entsprechendes Temperiersystem und ein Fahrzeug vorgeschlagen.

## Beschreibung

Die vorliegende Erfindung betrifft ein Verfahren zum Betreiben eines Temperiersystems sowie eine Recheneinheit und ein Computerprogramm zu dessen Durchführung und ein Temperiersystem mit einer solchen Recheneinheit sowie ein Fahrzeug mit einem solchen Temperiersystem.

### Hintergrund der Erfindung

In Fahrzeugen können Temperiersysteme mit einem elektrischen Kältemittelkompressor eingesetzt werden, die zumindest zur Innenraumkühlung verwendet werden. Dabei kann beispielsweise ein Wärmetauscher vorgesehen sein, der direkt oder indirekt (also beispielsweise über einen zwischen den Kältemittelkreislauf und die Kabinenluft geschalteten Kühlmittelkreislauf) Wärme von der Kabinenluft auf das Kältemittel (beispielsweise in einem Kältemittelverdampfer) überträgt. Durch Steuerung der Kältemitteltemperatur bei der Verdampfung und/oder einer Förderleistung eines die Kabinenluft durch den Wärmetauscher fördernden Gebläses kann die Kühlleistung in Bezug auf die Kabinenluft bzw. die Temperatur innerhalb der Kabine eingestellt werden. Der Regelalgorithmus kann in einem elektronischen Steuergerät implementiert sein und beispielsweise durch Änderung der Kompressordrehzahl eine bestimmte Kältemitteltemperatur oder Kühlleistung bereitstellen.

Die Kabinenkühlung ist eine sehr empfindliche Funktion, da die Auswirkungen von den Passagieren direkt wahrgenommen werden, insbesondere wenn die Kabinenkühlung direkt über einen Wärmetauscher zwischen Kältemittel und Kabinenluft erfolgt. Der Temperaturbereich, der verwendet wird, ist klein und ein Überschwingen der Regelung ist typischerweise nicht erlaubt bzw. hochgradig unerwünscht.

Anhand eines Beispiels konnte festgestellt werden, dass für eine starke Kabinenkühlung die Temperatur des Verdampfers einen Sollwert von 3°C hat, der durch eine entsprechende Verdichterdrehzahl geregelt wird. Wenn der Kühlbedarf in der Kabine durch eine schnelle Änderung der Gebläsedrehzahl, beispielsweise als Nutzereingabe, reduziert wird (z.B. von 100% Gebläsedrehzahl auf 20% Gebläsedrehzahl), muss die erforderliche Verdichterleistung sehr schnell reduziert werden. Kann die Steuerung dies nicht schnell genug verarbeiten, fällt die Verdampfertemperatur unter 1°C. In diesem Fall kann eine Steuerung die Kühlung der Kabine im Rahmen einer Sicherheitsfunktion zurückfahren oder notabschalten (z.B. Gebläse komplett abschalten, Luftklappen schließen) und/oder den Kältemittelkompressor abschalten, um ein Einfrieren des Verdampfers zu vermeiden.

Das obige Beispiel zeigt, dass eine schnelle Reaktion erforderlich ist, da das Temperiersystem selbst eine hohe Zeitkonstante hat und daher eine Standard-Pl-Regelung nicht schnell genug wäre. Das Problem ist, dass der Regler aus Stabilitätsgründen mit einer langsamen Reaktionszeit kalibriert werden muss. Daher wird neben dem Regler typischerweise ein Vorsteuerungswert verwendet, wodurch sich das Problem nun auf den Vorsteuerungswert verlagert. Es stellt sich heraus, dass es schwierig ist, den richtigen Vorsteuerungswert zu finden, da einer der wichtigsten Einflussfaktoren, nämlich die Luftfeuchtigkeit, variabel und in der Regel nicht bekannt ist. Eine direkte sensorische Erfassung der Luftfeuchte ist in Fahrzeugen typischerweise nicht vorgesehen. Eine modellbasierte Ermittlung der Luftfeuchte wäre basierend auf den Lufteigenschaften und einer Schätzung der Luftmasse durch zusätzliche Informationen aus dem Gebläse möglich, aber diese zusätzlichen Informationen aus dem Gebläse sind in der Regel in den Fahrzeugen nicht verfügbar. Daher kann eine herkömmliche Steuerung mit Vorsteuerung und PI-Regler die Reaktionszeit von Temperiersystemen für Fahrzeugkabinen nicht ausreichend steigern.

### Offenbarung der Erfindung

Erfindungsgemäß werden ein Verfahren zum Betreiben eines Temperiersystems, eine Recheneinheit und ein Computerprogramm zu dessen Durchführung sowie ein Temperiersystem und ein Fahrzeug mit den Merkmalen der unabhängigen Patentansprüche vorgeschlagen. Vorteilhafte Ausgestaltungen sind Gegenstand der Unteransprüche sowie der nachfolgenden Beschreibung.

Die Erfindung bedient sich der Maßnahme, auf Basis eines Reglerwerts, der im Rahmen einer Ausregelung eines Kompressors des Temperiersystems erhalten wird, einen Vorsteuerwert zur Steuerung des Kompressors anzupassen. Insbesondere kann bei sich verändernder Luftfeuchte ein erhöhter Regelbedarf entstehen, da Wasser eine deutlich höhere spezifische Wärmekapazität aufweist als Luft und daher die Luftfeuchte einen erheblichen Einfluss auf die vom Kompressor angeforderte Leistung ausübt. Allerdings ändert sich die Luftfeuchte typischerweise nicht sehr schnell, so dass eine Ausregelung des Kompressors typischerweise möglich ist. Um den Regelaufwand über die gesamte Betriebsdauer des Temperiersystems jedoch so gering wie möglich zu halten, wird, wie erwähnt, im Rahmen der Erfindung der Vorsteuerwert auf Basis eines in einem ausgeregelten Betriebszustand verwendeten Integralanteils eines Reglerwerts mit einem Proportional- und einem Integralanteil angepasst. In diesem Integralanteil des Reglerwerts befindet sich im ausgeregelten Betriebszustand die gesamte Information über Störgrößen, insbesondere über eine aktuelle Luftfeuchte, die von einer dem ursprünglichen Vorsteuerwert zugrunde liegenden Luftfeuchte abweicht. Durch die mittels des Integralanteils des Reglerwerts angepasste Vorsteuerung kann die Beanspruchung des Reglers minimiert und somit die gesamte Steuerung des Temperiersystems entlastet und insgesamt sowohl robuster als auch reaktionsschneller und präziser ausgestaltet werden.

Im Einzelnen wird ein Verfahren zum Betreiben eines Temperiersystems für ein Fahrzeug, das einen Kompressor zum Verdichten eines Kältemittels aufweist und zumindest zum Temperieren von Luft in einer Fahrzeugkabine eingerichtet ist, vorgeschlagen. Das Verfahren umfasst ein Steuern des Kompressors zum Einstellen einer vorbestimmbaren Zieltemperatur in dem Kältemittel saugseitig des Kompressors und/oder eines vorbestimmbaren Zieldrucks druckseitig des Kompressors. Das Steuern des Kompressors erfolgt unter Verwendung einer Vorsteuerung mit einem Vorsteuerwert und einer Regelung mit einem Reglerwert, der einen Proportionalanteil und einen Integralanteil umfasst. Als Reglerwert wird der Ausgang des Reglers bzw. Reglerausgangswert verstanden. Es sei darauf hingewiesen, dass der Reglerwert auch andere Anteile, wie insbesondere einen Differentialanteil aufweisen kann.

Bei einem Betrieb des Temperiersystems stellt sich für eine beliebige Referenzluftfeuchte für einen Vorsteuerwert in einem stationären Zustand, d.h. dann wenn der Zielwert erreicht ist, ein bestimmter Reglerwert ein, der im Wesentlichen aus dem Integralanteil besteht. Ein solcher Integralanteil wird im Folgenden als Referenzintegralanteil, der für eine Referenzluftfeuchte mit dem Vorsteuerwert verknüpft ist, bezeichnet. Für eine andere (insbesondere tatsächlich herrschende) Luftfeuchte stellt sich ein anderer Reglerwert ein.

Das Verfahren umfasst ferner ein Ermitteln eines Adaptionsbetriebszustands des Temperiersystems , ein Ermitteln des Integralanteils des Reglerwerts, wenn ein Adaptionsbetriebszustand als vorliegend ermittelt wurde, und ein Anpassen des Vorsteuerwerts und insbesondere auch eines Referenzintegralanteils in Abhängigkeit von dem ermittelten Integralanteil des Reglerwerts und dem Referenzintegralanteil des Reglerwerts, der für eine Referenzluftfeuchte mit dem Vorsteuerwert verknüpft ist. Somit kann also aus dem Vorsteuerwert für die Referenzluftfeuchte ein neuer Vorsteuerwert für die tatsächlich herrschende Luftfeuchte ermittelt, und dann auch im weiteren Betrieb verwendet werden.

Gemäß Ausgestaltungen der Erfindung kann das Verfahren ferner ein Ermitteln einer Luftfeuchte in der Fahrzeugkabine auf Basis des ermittelten Integralanteils des Reglerwerts umfassen. Dabei wird ausgenutzt, dass aufgrund des starken Einflusses der Luftfeuchte auf die erforderliche Kompressorleistung umgekehrt aus den bei gegebenem Betriebspunkt (der insbesondere durch Temperatur und Gebläsedrehzahl charakterisiert sein kann) erforderlichen Regeleingriffen auf die Luftfeuchte rückgeschlossen werden kann. Beispielsweise kann eine erforderliche Kompressorleistung zur Einstellung einer Zieltemperatur im Kältemittel bei bekannter Lufttemperatur und bekanntem Luftmassenstrom für trockene Luft (Referenzluftfeuchte null) berechnet werden. Die Differenz zwischen der tatsächlich erforderlichen Kompressorleistung (im ausgeregelten Zustand) und der theoretische erforderlichen Kompressorleistung (für trockene Luft berechnet) ist auf den Wassergehalt der Luft zurückzuführen. In Fällen, in denen der verwendete Vorsteuerwert für die Kompressorsteuerung bereits eine vorbestimmte Luftfeuchte berücksichtigt (z.B. wenn der Vorsteuerwert aus einer Kalibration erhalten wurde), kann die Gesamtluftfeuchte ebenfalls aus der ermittelten Differenz in den Leistungsanforderungen ermittelt werden, wobei die Luftfeuchte, die bei der Kalibration geherrscht hat, also die Referenzluftfeuchte, zu berücksichtigen ist. Die Information über die Luftfeuchte kann insbesondere zur Unterstützung von Fahrzeugfunktionen bereitgestellt werden, für die diese Information nützlich ist. Beispielsweise kann eine Funktion vorgesehen sein, die bei einer Luftfeuchte in der Nähe des Taupunkts sicherstellt, dass die Scheiben von Kondenswasser freigehalten werden, um eine sichere Fahrt bei klarer Sicht durch Nutzer des Fahrzeugs auf das Geschehen in der Umgebung des Fahrzeugs zu ermöglichen.

Im Rahmen der Erfindung wird unter dem Begriff "Luftfeuchte" eine Masse von in der Gasphase befindlichem Wasser in Relation zu einer Gesamtmasse der das gasförmige Wasser enthaltenden Luft, also ein Massenanteil des Wassers an der Luftgesamtmasse bzw. ein dazu proportionaler Wert verstanden. Eine relative Luftfeuchte, die einen Sättigungsgrad der Luft mit Wasserdampf bezeichnet kann bei bekannter Temperatur in diese Luftfeuchte umgerechnet werden.

Als spezifische (isobare) Wärmekapazität kann für Wasser(dampf) im Rahmen der Erfindung von einem Wert von 1,86 J/g·K ausgegangen werden. Demgegenüber weist trockene Luft eine spezifische Wärmekapazität von 1,006 J/g·K auf. Diese Werte beziehen sich jeweils auf einen Temperaturbereich, der in Fahrzeugklimaanlagen relevant ist (ca. 0°C bis 30°C) und Atmosphärendruck. Durch die große Abweichung zwischen den spezifischen Wärmekapazitäten von Wasserdampf und Luft kann auch ein kleiner Anteil von Wasserdampf bereits einen sicher ermittelbaren Effekt auf die Gesamtwärmekapazität der zu temperierenden Kabinenluft und damit auf die angeforderte Wärmeleistung des Kältemittelkompressors ausüben.

Gemäß zumindest einer Ausgestaltung umfasst das Anpassen des Vorsteuerwerts ein Ermitteln eines Korrekturwerts auf Basis des in dem Adaptionsbetriebszustand ermittelten Integralanteils des Reglerwerts und des Referenzintegralanteils des Reglerwerts, der für die Referenzluftfeuchte mit dem Vorsteuerwert (vor der Anpassung) verknüpft ist, und ein, insbesondere multiplikatives, Verrechnen des Vorsteuerwerts mit dem Korrekturwert. Dies ist eine besonders effektive und einfach umzusetzende Maßnahme, die kaum zusätzliche Rechenkapazität erfordert. Beispielsweise kann der Korrekturwert ein Quotient aus dem aktuell ermittelten Integralanteil und dem Referenzintegralanteil sein.

Gemäß zumindest einer Ausgestaltung ist das Temperiersystem zum Temperieren zumindest einer weiteren Komponente, insbesondere einer Traktionsbatterie und/oder einer Antriebseinheit, des Fahrzeugs eingerichtet. In einer solchen Ausgestaltung kann vorgesehen sein, dass der Vorsteuerwert einen Kabinenanteil und einen Anteil bezüglich der zumindest einen weiteren Komponente umfasst, und dass die Anpassung des Vorsteuerwerts durch eine Anpassung des Kabinenanteils bewirkt wird. Mit anderen Worten wird in einer solchen Ausgestaltung davon ausgegangen, dass die Abweichungen des Temperiersystems von der Kalibrierung im Wesentlichen durch einen schwankenden Wärmebedarf der Fahrzeugkabine verursacht werden, so dass auch nur deren Anteil am Vorsteuerwert korrigiert zu werden braucht.

Gemäß zumindest einer Ausgestaltung kann vorgesehen sein, dass der Korrekturwert gespeichert wird und für nachfolgende Betriebszyklen als ein Referenzwert verwendet wird. Damit kann eine einmal vorgenommene Anpassung auch in nachfolgenden Steuerungszyklen weiterverwendet werden, wodurch beispielsweise Anpassungen des Fahrzeugs bzw. des Temperiersystems (z.B. an unterschiedliche Klimazonen) ohne separaten Applikationsaufwand möglich sind.

Gemäß zumindest einer Ausgestaltung wird der Adaptionsbetriebszustand als vorliegend ermittelt, wenn ein stationärer Betriebszustand des Temperiersystems vorliegt. Ein stationärer Betriebszustand bedeutet insbesondere, dass bei konstanter Ansteuerung des Kompressors die Zieltemperatur des Kältemittels konstant eingehalten wird (bzw. beispielsweise über einen vorbestimmbaren Zeitraum um weniger als einen Schwellwert um den Zielwert herum schwankt). Dies kann beispielsweise anhand des Proportionalanteils des Reglerwerts ermittelt werden, indem überprüft wird, ob dieser einen vorbestimmbaren Anteilsschwellwert unterschreitet. Alternative Bedingungen zur Feststellung des Vorliegens eines stationären Betriebszustands können unter anderem umfassen (jeweils innerhalb eines vorbestimmbaren Zeitraumes): konstanter Integralanteil des Reglerwerts, konstante Summe aus Integral- und Proportionalanteil des Reglerwerts, konstante Drehzahl des Kompressors, oder eine konstante Temperatur und/oder ein konstanter Druck des Kältemittels. In einer solchen Situation kann davon ausgegangen werden, dass der Kompressor im Wesentlichen ausgeregelt ist. Daher kann der Integralanteil für die gegebenen Betriebsbedingungen als konstant angenommen werden, so dass eine stabile Anpassung des Vorsteuerwerts möglich ist. Ein "konstanter" Wert wird dabei jeweils angenommen, wenn eine Abweichung eines jeweils aktuellen Werts von einem nominellen Wert über einen gewissen Zeitraum eine akzeptable Abweichung nicht überschreitet. Mit anderen Worten ist eine gewisse Toleranz gegenüber Abweichungen gegeben, so dass der Begriff des "konstanten" Werts nicht mathematisch exakt, sondern technisch realisierbar zu verstehen ist.

Eine erfindungsgemäße Recheneinheit, z.B. ein Steuergerät eines Kraftfahrzeugs, ist, insbesondere programmtechnisch, dazu eingerichtet, ein erfindungsgemäßes Verfahren durchzuführen.

Auch die Implementierung eines erfindungsgemäßen Verfahrens in Form eines Computerprogramms oder Computerprogrammprodukts mit Programmcode zur Durchführung aller Verfahrensschritte ist vorteilhaft, da dies besonders geringe Kosten verursacht, insbesondere wenn ein ausführendes Steuergerät noch für weitere Aufgaben genutzt wird und daher ohnehin vorhanden ist. Schließlich ist ein maschinenlesbares Speichermedium vorgesehen mit einem darauf gespeicherten Computerprogramm wie oben beschrieben. Geeignete Speichermedien bzw. Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich. Ein solcher Download kann dabei drahtgebunden bzw. kabelgebunden oder drahtlos (z.B. über ein WLAN-Netz, eine 3G-, 4G-, 5G- oder 6G-Verbindung, etc.) erfolgen.

Ein erfindungsgemäßes Temperiersystem weist eine erfindungsgemäße Recheneinheit auf und ist auch sonst zur Durchführung eines erfindungsgemäßen Verfahrens eingerichtet. Das erfindungsgemäße Fahrzeug weist ein erfindungsgemäßes Temperiersystem auf. Das Temperiersystem bzw. das Fahrzeug profitieren dementsprechend von den hier erläuterten Vorteilen des erfindungsgemäßen Verfahrens in sinngemäß entsprechender Weise.

Weitere Vorteile und Ausgestaltungen der Erfindung ergeben sich aus der Beschreibung und der beiliegenden Zeichnung.

Die Erfindung ist anhand eines Ausführungsbeispiels in der Zeichnung schematisch dargestellt und wird im Folgenden unter Bezugnahme auf die Zeichnung beschrieben.

### Kurze Beschreibung der Zeichnungen

Figur 1 zeigt schematisch ein Temperiersystem gemäß einer Ausgestaltung der Erfindung anhand eines Blockdiagramms.
Figur 2 zeigt schematisch eine Ausgestaltung eines erfindungsgemäßen Verfahrens anhand eines vereinfachten Ablaufdiagramms.

### Ausführungsform(en) der Erfindung

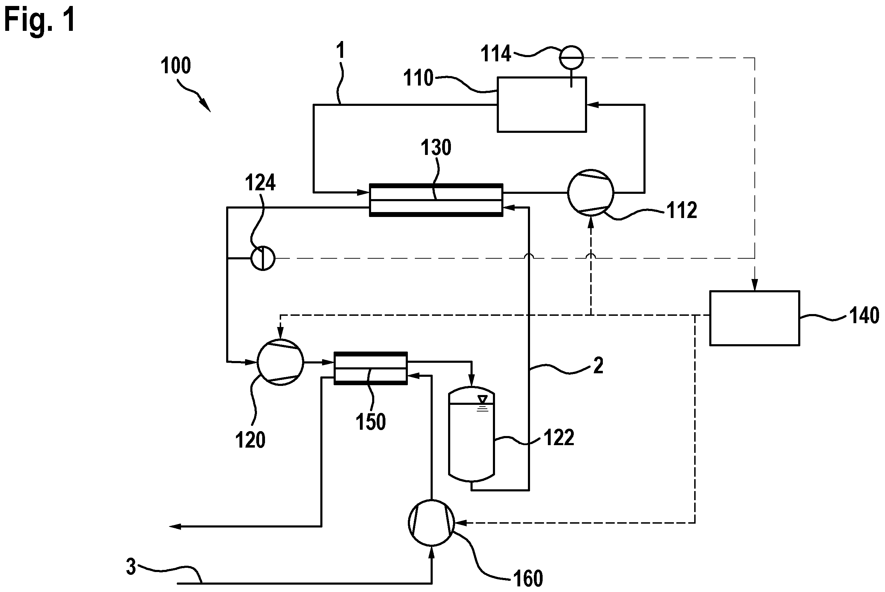

In Figur 1 ist ein Temperiersystem gemäß einer Ausgestaltung der Erfindung schematisch anhand eines Blockdiagramms gezeigt und insgesamt mit 100 bezeichnet. Das Temperiersystem 100 weist einen Kompressor 120 zum Verdichten eines Kältemittels 2 auf. Als Kältemittel kann beispielsweise CO2, Propan, Pentan oder eine andere unfunktionalisierte oder funktionalisierte Kohlenwasserstoffverbindung, die unter den Betriebsbedingungen des Temperiersystems zu einem Phasenwechsel in der Lage ist, verwendet werden. Auch Mischungen von mehreren dieser Verbindungen können gegebenenfalls als das Kältemittel 2 verwendet werden.

Stromab des Kompressors 120 ist ein Kältemittelkondensator 150 angeordnet, der dazu dient, die Kompressionswärme, die durch die Verdichtung in das Kältemittel eingebracht wird, zumindest teilweise an ein Kühlmedium, beispielsweise mittels eines Kühlgebläses 160 geförderte Umgebungsluft 3, abzugeben. Dabei kann das Kältemittel zumindest teilweise kondensieren. In dem hier gezeigten Beispiel ist stromab des Kältemittelkondensators 150 ein Separator 122 vorgesehen, der einen flüssigen Anteil von einem gasförmigen Anteil des Kältemittels 2 trennt. Das flüssige Kältemittel 2 wird stromab des Separators 122 in einen Wärmetauscher 130, der auch als Kältemittelverdampfer bezeichnet wird, geleitet. In dem Wärmetauscher 130 nimmt das Kältemittel 2 Wärme aus Luft 1, die aus einer Fahrzeugkabine 110 eines Fahrzeugs stammt, auf und wird dabei zumindest teilweise wieder verdampft.

Die Luft 1, gegen die das Kältemittel 2 in dem Wärmetauscher 130 erwärmt wird, wird in dem hier gezeigten Beispiel mittels eines Innengebläses 112 durch die Fahrzeugkabine 110 und den Wärmetauscher 130 zirkuliert.

In der Fahrzeugkabine 110 ist in dem hier gezeigten Beispiel ein Temperatursensor 114 vorgesehen. Ferner ist in dem Strömungspfad des Kältemittels 2, hier stromab des Wärmetauschers 130, ein Sensor 124 vorgesehen, der Temperatur und/oder Druck des Kältemittels 2 erfasst. In dem hier gezeigten Beispiel sind die Sensoren 114, 124 mit einer Recheneinheit 140, beispielsweise einem Steuergerät des Temperiersystems 100, datenleitend verbunden. Die Recheneinheit 140 ist dazu eingerichtet, das Temperiersystem 100, insbesondere basierend auf Signalen der Sensoren 114, 124 und ggf. weiterer Sensoren und/oder Eingabeschnittstellen, zu steuern. Dazu kann die Recheneinheit beispielsweise mit dem Kompressor 120, dem Innengebläse 112 und dem Kühlgebläse 160 datenleitend verbunden sein. Insbesondere kann die Recheneinheit 140 dazu eingerichtet sein, eine Drehzahl von Kompressor 120 und/oder Innengebläse 112 und/oder Kühlgebläse 160 zu steuern, um eine vorbestimmbare Zieltemperatur bzw. einen vorbestimmbaren Zieldruck in dem Kältemittel 2 einzustellen. Die Zieltemperatur bzw. der Zieldruck können insbesondere von einem seitens eines Insassen der Fahrzeugkabine 110 angeforderten Zielwert für die Temperatur der Luft 1 in der Fahrzeugkabine 110 abhängen.

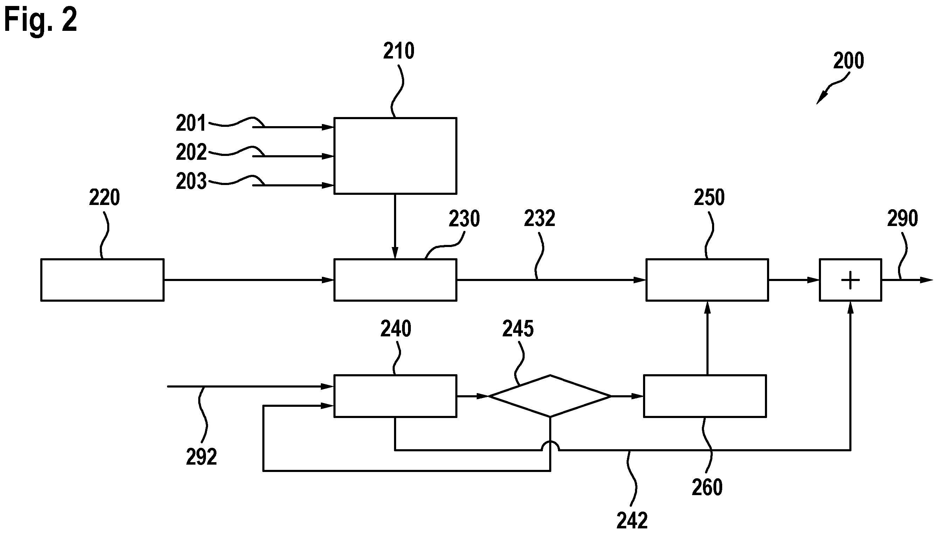

In Figur 2 ist schematisch eine Ausgestaltung eines erfindungsgemäßen Verfahrens anhand eines vereinfachten Ablaufdiagramms gezeigt und insgesamt mit 200 bezeichnet. Das in Figur 2 dargestellte Verfahren 200 kann auch als eine im Rahmen der Erfindung verwendbare Struktur eines Reglers verstanden werden. Insbesondere kann das Verfahren 200 zur Steuerung der in Figur 1 gezeigten Drehzahl des Kompressors 120 des Temperiersystems verwendet werden. Im Folgenden können daher bei der Beschreibung des Verfahrens 200 erwähnte Vorrichtungskomponenten auch als Bezugnahmen auf das in Figur 1 dargestellte Temperiersystem verstanden werden.

Im Rahmen des Verfahrens 200 wird, basierend auf einem aktuellen Betriebspunkt 210 und einer Sollwertvorgabe 220 in einem Block 230 ein Vorsteuerwert 232 zur Ansteuerung (z.B. Einstellung der Verdichtungsleistung bzw. Drehzahl) des Kompressors 120 ermittelt. In den Betriebspunkt 210 gehen beispielsweise Werte wie ein aktueller Wärmeeintrag 201 in die Fahrzeugkabine 110 (z.B. zu ermitteln aus Sitzbelegung, aktueller Außentemperatur, aktueller Sonneneinstrahlung, ...), eine aktuelle Temperatur 202 der Luft 1 in der Fahrzeugkabine 110, eine aktuelle Drehzahl 203 des Innengebläses 112 und/oder andere bzw. weitere Werte ein. Die Sollwertvorgabe 220 kann insbesondere eine Zieltemperatur des Kältemittels 2 umfassen. Diese kann insbesondere unter Berücksichtigung einer Zieltemperatur der Luft 1 in der Fahrzeugkabine 110 ermittelt werden, wobei die Zieltemperatur der Luft 1 in der Fahrzeugkabine 110 beispielsweise als Nutzervorgabe über eine Eingabeschnittstelle in der Fahrzeugkabine 110 vorgebbar sein kann.

Der Vorsteuerwert wird über eine Korrekturfunktion 250 und ein Addierglied "+" geführt, um ein Steuersignal 290 zur Ansteuerung des Kompressors zu gewinnen. Damit stellt sich in dem Temperiersystem 100, insbesondere nach einer gewissen Betriebsdauer, eine tatsächliche Temperatur des Kältemittels 2ein, die beispielsweise mittels eines Sensors 124 erfasst wird. Eine Differenz zwischen der sensorisch erfassten Kältemitteltemperatur und der Zieltemperatur 220 ergibt eine Regelabweichung 292, auf Basis derer ein Regler 240 einen Reglerwert 242 zur Änderung (+) des Vorsteuerwerts ermittelt. Dieser Reglerwert 242 setzt sich aus einem Proportionalanteil, der proportional zu der aktuellen Regelabweichung 292 ist, sowie aus einem Integralanteil, der eine Gesamtsumme aller bisheriger Proportionalanteile darstellt, zusammen. Mit zunehmender Betriebsdauer nimmt typischerweise der Betrag des Integralanteils asymptotisch bis zu einem Sättigungswert zu, während der Proportionalanteil gegen Null tendiert (sofern sich der Betriebspunkt 210 nicht verändert). Wenn der Betrag des Proportionalanteils des Reglerwerts 242 unter einen vorbestimmbaren Anteilsschwellwert sinkt, kann im Rahmen einer Ausgestaltung von einem sogenannten stationären Betriebszustand ausgegangen werden, d.h. die Regelabweichung 292 ist in diesem stationären Betriebszustand ausgeregelt und der Reglerwert 242 ist im Wesentlichen konstant und besteht nahezu ausschließlich aus dem Integralanteil. Dies kann dann als ein Erreichen eines Adaptionsbetriebszustands angesehen werden. Wie eingangs bereits erläutert, kommen zum Feststellen eines Vorliegens eines solchen Adaptionsbetriebszustands auch andere Kriterien als der Betrag des Proportionalanteils des Reglerwerts 242 in Frage.

In einem Schritt 245 wird überprüft, ob ein solcher Adaptionsbetriebszustand vorliegt. Ist dies nicht der Fall, kehrt das Verfahren 200 zum Betrieb des Reglers 240 zurück. Liegt hingegen ein stationärer Betriebszustand vor, wird der zu diesem Zeitpunkt ausgehende Reglerwert 242 (bzw. der mit dem Reglerwert 242 im Wesentlichen identische Integralanteil) ermittelt.

Aus dem so ermittelten Integralanteil des Reglerwerts 242 wird in einem Schritt 260 ein Korrekturwert ermittelt, mittels dessen der Vorsteuerwert 230 und dessen zugehöriger Referenzintegralanteil im Rahmen eines Schritts 250 angepasst wird. Beispielsweise kann dieser Korrekturwert in Form eines multiplikativen Korrekturfaktors, der im Wesentlichen dem Verhältnis aus dem aktuell ermittelten Integralanteil und einem im Rahmen einer ursprünglichen Kalibrierung des Vorsteuerwerts ermittelten Referenzintegralanteil entspricht, berechnet werden und mit dem ursprünglichen Vorsteuerwert 232 multipliziert werden. Weiterhin wird der Referenzintegralanteil in Ausgestaltungen der Erfindung so angepasst bzw. ein neuer Referenzintegralanteil so bestimmt, dass die Summe aus dem angepassten Referenzintegralanteil und dem angepassten Vorsteuerwert der Summe aus dem vorherigen Vorsteuerwert und dem vorherigen Referenzintegralanteil entspricht.

Das Verfahren 200 kann dann wiederholt werden und dabei das Vorliegen eines (erneuten) stationären Betriebszustands abgewartet werden. Damit kann auf sich verändernde Betriebszustände (beispielsweise Wasserdampfanteile in der Luft 1 der Fahrzeugkabine 110) variabel reagiert werden. Insbesondere kann ein in einem Schritt 250 ermittelter Korrekturwert auch über ein Abstellen des Fahrzeugs hinweg gespeichert und weiterverwendet werden. Alternativ oder zusätzlich kann ein angepasster Vorsteuerwert auch im Block 230 für eine zukünftige Verwendung gespeichert werden. Dabei kann beispielsweise eine geeignete Filterung zum Einsatz kommen. Insbesondere kann, beispielsweise im Falle einer gehäuft vorkommenden Anpassung des Vorsteuerwerts 232 in Richtung eines Korrekturfaktors >1 (z.B. aufgrund einer höheren Luftfeuchte, als dies den Referenzdaten entspricht) mit der Zeit der Block 230 in Richtung einer generell höheren Leistungsanforderung modifiziert werden, ohne dazu eine neuerliche Kalibrierung vornehmen zu müssen. Dies ist insbesondere vorteilhaft zur allmählichen Anpassung eines individuellen Fahrzeugs, beispielsweise an eine von der Kalibration deutlich abweichende Klimazone oder im Rahmen von jahreszeitlichen klimatischen Schwankungen.

Durch eine derartige längerfristige Anpassung des Vorsteuerwerts 230 kann insgesamt eine höhere Regelgüte und damit eine schnellere und präzisere Reaktion des gesamten Temperiersystems 100 erzielt werden.

Es sei hier ausdrücklich betont, dass das hier aus Übersichtsgründen gewählte Beispiel mit einem schrittweisen Ablauf des Verfahrens 200 lediglich ein Beispiel für eine Implementierung der Erfindung darstellt und dass im Rahmen der Erfindung auch davon abweichende Vorgehensweisen gewählt werden können. Beispielsweise können im Rahmen von Ausgestaltungen der Erfindung Abläufe implementiert werden, bei denen eine abweichende, z.B. umgekehrte Reihenfolge einzelner oder aller Verfahrensschritte oder eine teilweise oder vollständig kontinuierliche, parallele und/oder simultane Durchführung mehrerer oder aller Verfahrensschritte vorgesehen ist.

## Patentansprüche

1. Verfahren (200) zum Betreiben eines Temperiersystems (100) für ein Fahrzeug, das einen Kompressor (120) zum Verdichten eines Kältemittels (2) aufweist und zumindest zum Temperieren von Luft (1) in einer Fahrzeugkabine (110) eingerichtet ist, umfassend:
Steuern des Kompressors (120) zum Einstellen einer vorbestimmbaren Zieltemperatur (201) in dem Kältemittel (2) saugseitig des Kompressors (120) und/oder eines vorbestimmbaren Zieldrucks druckseitig des Kompressors (120), wobei das Steuern des Kompressors (120) unter Verwendung einer Vorsteuerung mit einem Vorsteuerwert (230) und einer Regelung (240) mit einem Reglerwert, der einen Proportionalanteil und einen Integralanteil umfasst, erfolgt,
Ermitteln (245) eines Adaptionsbetriebszustands des Temperiersystems (100),
Ermitteln des Integralanteils des Reglerwerts, wenn der Adaptionsbetriebszustand als vorliegend ermittelt wurde,
Anpassen (250) des Vorsteuerwerts (230) in Abhängigkeit von dem ermittelten Integralanteil des Reglerwerts in dem Adaptionsbetriebszustand und einem Referenzintegralanteil des Reglerwerts, der für eine Referenzluftfeuchte mit dem Vorsteuerwert (230) verknüpft ist.

2. Verfahren (200) nach Anspruch 1, wobei das Anpassen (250) des Vorsteuerwerts (230) ein Ermitteln eines Korrekturwerts auf Basis des ermittelten Integralanteils des Reglerwerts in dem Adaptionsbetriebszustand und des Referenzintegralanteils des Reglerwerts, der für die Referenzluftfeuchte mit dem Vorsteuerwert (230) verknüpft ist, und ein, insbesondere multiplikatives, Verrechnen des Vorsteuerwerts (230) mit dem Korrekturwert umfasst.

3. Verfahren (200) nach Anspruch 2, wobei der Korrekturwert gespeichert wird und für nachfolgende Betriebszyklen als ein Referenzwert (220) verwendet wird.

4. Verfahren (200) nach Anspruch 2 oder 3, wobei das Ermitteln des Korrekturwerts eine Quotientenbildung des ermittelten Integralanteils des Reglerwerts in dem Adaptionsbetriebszustand und des Referenzintegralanteils des Reglerwerts, der für die Referenzluftfeuchte mit dem Vorsteuerwert (230) verknüpft ist, umfasst.

5. Verfahren (200) nach einem der vorstehenden Ansprüche, weiterhin umfassend ein Bestimmen (250) eines Referenzintegralanteils des Reglerwerts, der für die Referenzluftfeuchte mit dem angepassten Vorsteuerwert (230) verknüpft ist, in Abhängigkeit von dem ermittelten Integralanteil des Reglerwerts in dem Adaptionsbetriebszustand, dem Referenzintegralanteil des Reglerwerts, der für die Referenzluftfeuchte mit dem Vorsteuerwert (230) verknüpft ist, und dem Vorsteuerwert (230).

6. Verfahren (200) nach einem der vorstehenden Ansprüche, weiterhin umfassend ein Ermitteln (260) einer Luftfeuchte in der Fahrzeugkabine (110) auf Basis des ermittelten Integralanteils des Reglerwerts.

7. Verfahren (200) nach einem der vorstehenden Ansprüche, wobei das Temperiersystem (100) zum Temperieren zumindest einer weiteren Komponente, insbesondere einer Traktionsbatterie und/oder einer Antriebseinheit, des Fahrzeugs eingerichtet ist, wobei der Vorsteuerwert (230) einen Kabinenanteil und einen Anteil bezüglich der zumindest einen weiteren Komponente umfasst, und wobei die Anpassung (250) des Vorsteuerwerts (230) durch eine Anpassung des Kabinenanteils bewirkt wird.

8. Verfahren (200) nach einem der vorstehenden Ansprüche, wobei der Adaptionsbetriebszustand als vorliegend ermittelt wird, wenn ein stationärer Betriebszustand des Temperiersystems (100) vorliegt.

9. Recheneinheit (140), die dazu eingerichtet ist, alle Verfahrensschritte eines Verfahrens nach einem der vorstehenden Ansprüche durchzuführen.

10. Temperiersystem (100) für ein Fahrzeug mit einem Kompressor (120) zum Verdichten eines Kältemittels (2), zumindest einem Wärmetauscher (130) zum Übertragen von Wärme zwischen Luft (1) in einer Fahrzeugkabine (110) des Fahrzeugs und dem Kältemittel (2) und einer Recheneinheit (140) nach Anspruch 7.

11. Fahrzeug mit einem Temperiersystem (100) nach Anspruch 10.

12. Computerprogramm, das eine Recheneinheit dazu veranlasst, alle Verfahrensschritte eines Verfahrens nach einem der Ansprüche 1 bis 8 durchzuführen, wenn es auf der Recheneinheit ausgeführt wird.

13. Maschinenlesbares Speichermedium mit einem darauf gespeicherten Computerprogramm nach Anspruch 12.
